(19) Europäisches Patentamt / European Patent Office / Office européen des brevets

(11) **EP 4 198 648 A1**

(12) **DEMANDE DE BREVET EUROPEEN**

(43) Date de publication:
**21.06.2023 Bulletin 2023/25**

(21) Numéro de dépôt: **21216102.0**

(22) Date de dépôt: **20.12.2021**

(51) Classification Internationale des Brevets (IPC):
*G04C 3/12* *(2006.01)*

(52) Classification Coopérative des Brevets (CPC):
**G04C 3/12**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **The Swatch Group Research and Development Ltd**
**2074 Marin (CH)**

(72) Inventeurs:
  • **BORN, Jean-Jacques**
    **1110 Morges (CH)**

  • **FERRI, Yvan**
    **1004 Lausanne (CH)**
  • **DIDIER, Alexandre**
    **3235 Erlach (CH)**
  • **PARATTE, Lionel**
    **2074 Marin-Epagnier (CH)**
  • **TESTORI, Léonard**
    **2502 Bienne (CH)**

(74) Mandataire: **ICB SA**
**Faubourg de l'Hôpital, 3**
**2001 Neuchâtel (CH)**

(54) **MOTEUR PIÉZOÉLECTRIQUE ROTATIF, NOTAMMENT POUR L'HORLOGERIE**

(57) L'invention concerne un moteur piézoélectrique (1) rotatif, notamment pour une pièce d'horlogerie, le moteur (1) comprenant :
- un rotor (3) configuré pour pouvoir tourner et actionner un dispositif mécanique,
- un stator (2) configuré pour faire tourner le rotor (3), le stator (2) comprenant un actionneur piézoélectrique muni d'un résonateur (29) agencé pour effectuer un mouvement oscillatoire, le stator (2) comprenant un élément fixe (4) et le résonateur comprenant un élément mobile (5) agencé à distance de l'élément fixe (4) et relié à l'élément fixe (4), l'actionneur piézoélectrique étant configuré pour déplacer l'élément mobile (5) contre le rotor (3) pour le faire tourner, le déplacement de l'élément mobile (5) faisant tourner le rotor (3) dans un premier sens.

Fig. 2

EP 4 198 648 A1

**Description**

Domaine technique de l'invention

L'invention se rapporte au domaine technique des moteurs piézoélectriques rotatifs. L'invention se rapporte également au domaine technique des pièces d'horlogerie munies d'un tel moteur piézoélectrique rotatif.

Arrière-plan technologique

Les moteurs électriques usuellement utilisés en horlogerie sont des moteurs rotatifs de type « Lavet », qui fonctionnent sur des principes physiques électromagnétiques. Un tel moteur comporte généralement un stator muni de bobines et un rotor aimanté, qui tourne par actionnement déphasé des bobines.

Cependant, ces moteurs ont une résistance limitée aux champs magnétiques élevés. A partir d'une certaine valeur de champs magnétique, le moteur se bloque. En général, ils se bloquent sous l'effet d'un champ magnétique qui dépasse 2 mT.

Ainsi, pour éviter ce problème, il est nécessaire de concevoir des moteurs fonctionnant sur d'autres principes physique.

Il existe par exemple des moteurs électrostatiques à peignes, tel que celui décrit dans le brevet CH709512. Mais les peignes prennent de la place, et ils consomment une énergie plus élevée que les moteurs de type « Lavet ».

Des moteurs basés sur l'effet piézoélectrique ont aussi été mis au point, par exemple dans le brevet EP0587031. Mais celui-ci est limité à l'actionnement d'un quantième. Cependant, sa consommation élevée et le risque d'usure prématurée ne permettent pas l'entraînement d'une aiguille des secondes, qui demande en général le plus d'énergie.

Résumé de l'invention

Le but de la présente invention est de proposer un moteur piézoélectrique rotatif, qui peut résister à des champs électromagnétiques élevés, tout en gardant une consommation d'énergie et un volume approprié.

A cet effet, l'invention se rapporte à un moteur piézoélectrique rotatif, notamment pour une pièce d'horlogerie, le moteur comprenant :

- un rotor configuré pour pouvoir tourner et actionner un dispositif mécanique,

- un stator configuré pour faire tourner le rotor, le stator comprenant un actionneur piézoélectrique muni d'un résonateur agencé pour effectuer un mouvement oscillatoire.

L'invention est remarquable en ce que le stator comprend un élément fixe et le résonateur comprend un élément mobile agencé à distance de l'élément fixe et relié à l'élément fixe, l'actionneur piézoélectrique étant configuré pour déplacer l'élément mobile contre le rotor pour le faire tourner, le déplacement de l'élément mobile faisant tourner le rotor dans un premier sens.

Un stator ayant une telle configuration permet de transmettre facilement un mouvement de rotation au rotor grâce à un actionneur piézoélectrique. En effet, l'élément mobile peut être déplacé afin d'être en contact avec le rotor pour transmettre un mouvement dans un premier sens. Ainsi, lorsque le résonateur oscille, l'élément mobile entre contact avec le rotor et lui transmet une force pour le faire tourner dans un premier sens.

Selon une forme de réalisation particulière de l'invention, le résonateur comprend au moins un bras flexible, de préférence deux bras flexibles, voire trois ou quatre bras flexibles, connectés par une extrémité à l'élément fixe du stator, et par une autre extrémité à l'élément mobile du stator, de préférence répartis angulairement autour de l'élément mobile.

Selon une forme de réalisation particulière de l'invention, l'élément mobile effectue un mouvement orbital dans un deuxième sens inverse du premier sens, lorsqu'il est en contact avec le rotor.

Selon une forme de réalisation particulière de l'invention, l'élément mobile est toujours en contact avec le rotor pendant le fonctionnement du moteur.

Selon une forme de réalisation particulière de l'invention, le mouvement de l'élément mobile fait tourner le rotor de manière continue.

Selon une forme de réalisation particulière de l'invention, l'élément mobile est immobile en rotation sur lui-même.

Selon une forme de réalisation particulière de l'invention, l'élément mobile a une forme d'anneau, le rotor étant agencé à l'intérieur de l'anneau.

Selon une forme de réalisation particulière de l'invention, le contact entre l'élément mobile et le rotor mobile est à l'intérieur de l'anneau.

Selon une forme de réalisation particulière de l'invention, le rotor comprend une roue dentée, l'anneau comportant une denture interne coopérant avec une denture externe de la roue dentée.

Selon une forme de réalisation particulière de l'invention, les bras effectuent un mouvement de va et vient radial de manière à faire osciller l'élément mobile et le déplacer.

Selon une forme de réalisation particulière de l'invention, l'élément mobile est agencé autour du rotor.

Selon une forme de réalisation particulière de l'invention, les bras sont actionnés par un signal déphasé de $\dfrac{2\pi}{N}$ entre deux bras consécutifs, $N$ étant le nombre de bras.

Selon une forme de réalisation particulière de l'invention, le résonateur oscille à une fréquence correspondant à sa fréquence propre.

Selon une forme de réalisation particulière de l'invention, le moteur comporte comportant des moyens d'ajustement constants ou temporels de la tension mécanique de chaque bras par une tension électrique d'offset continue ou par la modification de l'amplitude de tensions électriques alternatives.

Selon une forme de réalisation particulière de l'invention, le rotor et/ou le stator est obtenu par micro-usinage, par exemple à partir de silicium ou de métal.

Selon une forme de réalisation particulière de l'invention, le rotor comprend des lames flexibles pour maintenir l'engrènement avec l'élément mobile en cas de choc

L'invention se rapporte également à une pièce d'horlogerie comportant un mouvement d'horlogerie comprenant une transmission d'engrenages configurée pour faire tourner au moins une aiguille, et comprenant un tel moteur piézoélectrique agencé pour actionner la transmission d'engrenages.

Brève description des figures

D'autres particularités et avantages ressortiront clairement de la description qui en est faite ci-après, à titre indicatif et nullement limitatif, en référence aux dessins annexés, dans lesquels :

- la figure 1 représente schématiquement une vue de dessus d'un premier mode de réalisation du moteur piézoélectrique rotatif selon l'invention à l'arrêt, le rotor et le stator n'étant pas en contact,

- la figure 2 représente schématiquement une vue de dessus du premier mode de réalisation du moteur piézoélectrique rotatif selon l'invention en fonctionnement, le rotor et le stator étant en contact à six heures,

- la figure 3 représente schématiquement une vue de dessus du premier mode de réalisation du moteur piézoélectrique rotatif selon l'invention en fonctionnement, le rotor et le stator étant en contact à neuf heures,

- la figure 4 représente schématiquement une vue de dessus du premier mode de réalisation du moteur piézoélectrique rotatif selon l'invention en fonctionnement, le rotor et le stator étant en contact à midi,

- la figure 5 représente schématiquement une vue de dessus du premier mode de réalisation du moteur piézoélectrique rotatif selon l'invention en fonctionnement, le rotor et le stator étant en contact à trois heures,

- la figure 6 représente schématiquement une vue de dessous du premier mode de réalisation du moteur piézoélectrique rotatif selon l'invention à l'arrêt,

- la figure 7 représente schématiquement une vue en coupe de côté du moteur piézoélectrique rotatif selon le premier mode de réalisation de l'invention,

- la figure 8 représente schématiquement une vue de dessus d'un deuxième mode de réalisation d'un moteur piézoélectrique rotatif selon l'invention à l'arrêt, le rotor et le stator n'étant pas en contact, et

- la figure 9 représente schématiquement une vue de dessous du deuxième mode de réalisation de réalisation du moteur piézoélectrique rotatif de selon l'invention,

- la figure 10 représente schématiquement une vue de dessus d'un troisième mode de réalisation d'un moteur piézoélectrique rotatif selon l'invention en fonctionnement, le moteur subissant un choc, et

- la figure 11 est un graphique sur lequel est représenté l'accélération due à un choc sur le moteur piézoélectrique, ainsi que le déplacement de la roue dentée.

Description détaillée de l'invention

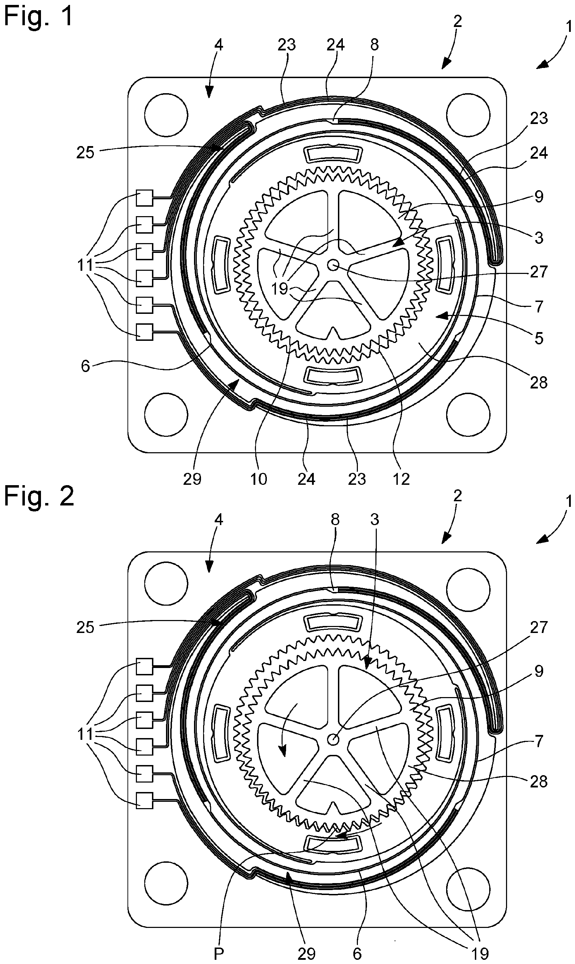

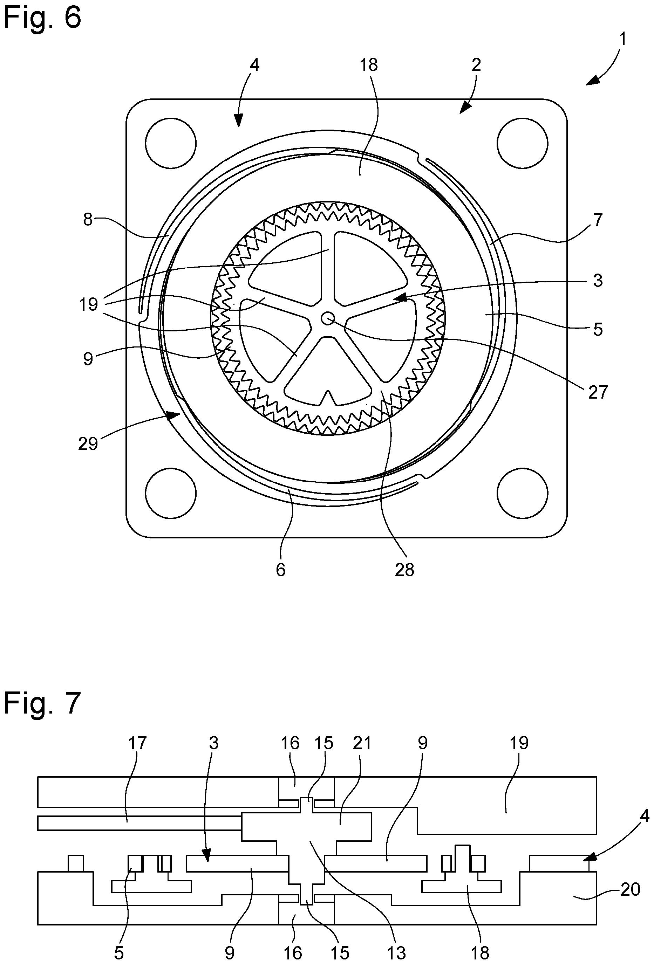

Les figures 1 à 7 montrent un premier mode de réalisation d'un moteur piézoélectrique 1 rotatif. Le moteur peut notamment servir dans une pièce d'horlogerie pour actionner un dispositif d'affichage, comme des aiguilles agencées sur un cadran. Le moteur piézoélectrique 1 s'étend sensiblement dans un plan.

Le moteur piézoélectrique 1 comprend un rotor 3 mobile en rotation sur lui-même, et configuré pour pouvoir tourner et actionner une transmission d'engrenages mécaniques, notamment pour un dispositif d'affichage. Le moteur piézoélectrique 1 comprend un stator 2 configuré pour actionner et faire tourner le rotor 3.

Le rotor 3 comprend une roue dentée 9 agencée au centre du moteur piézoélectrique 1. La roue 9 est par exemple montée sur un axe 13 muni d'un pivot 15 à chaque extrémité, ces pivots étant montés dans des paliers 16 permettant à l'axe 13 de tourner. La roue 9 comporte un anneau externe 28 et un moyeu 27 au centre, le moyeu 27 étant relié à l'anneau 28 par des rayons rigides 19. L'axe 13 comporte un pignon 21 parallèle à la roue 9, et agencé pour transmettre le mouvement reçu par la roue 9 à une transmission d'engrenages 17, par exemple à un mouvement d'une pièce d'horlogerie. La roue 9 est munie d'une denture périphérique 10 sur l'anneau 28, qui permet d'actionner la roue. 9.

De préférence, le rotor 3 et/ou le stator 2 comprend du silicium, de préférence en totalité. Alternativement, le rotor 3 est en métal de façon à limiter l'usure et les frottements, lorsque le stator 2 est en silicium, et réciproquement.

Encore alternativement, par micro-usinage, le rotor 3 et/ou le stator 2 comprend, de préférence en totalité, un matériau, tel que du quartz, du Nickel (obtenu par électrodéposition de métal ou par un procédé de type LIGA), ou du diamant (obtenu par un dépôt de type ALD).

Le stator 2 comprend un élément fixe 4 immobile et un élément mobile 5 configuré pour actionner la roue 9 du rotor 3. L'élément mobile 5 est agencé à distance de l'élément fixe 4. L'élément mobile 5 a une forme d'anneau agencé autour du rotor 3, le rotor 3 étant agencé à l'intérieur de l'anneau. L'élément mobile 5 est muni d'une denture interne 12 sur l'anneau, la denture interne 12 coopérant avec la denture périphérique 10 de la roue dentée 9 pour la faire tourner. L'anneau est plus large que le rotor 3 pour pouvoir insérer le rotor 3.

L'élément fixe 4 a une forme décrivant un espace interne circulaire, dans lequel l'élément mobile 5 et le rotor 3 sont agencés.

Le stator 2 comprend en outre un actionneur piézoélectrique 25 intégré à un résonateur agencé pour effectuer un mouvement oscillatoire, de manière à générer un mouvement orbital à l'élément mobile 5. Le résonateur comprend l'élément mobile 5 et est relié à l'élément fixe 4.

Le résonateur comprend trois bras flexibles 6, 7, 8 connectés à l'élément fixe 4 du stator 2 par une extrémité et connecté à l'élément mobile 5 du stator 2 par l'autre extrémité. Les bras flexibles 6, 7, 8 sont répartis angulairement autour de l'élément mobile 5. Ainsi, avec trois bras 6, 7, 8, deux bras consécutifs sont agencés avec un angle de 120° entre eux.

Alternativement, selon d'autres modes de réalisation, l'actionneur piézoélectrique comprend un résonateur ayant deux bras, voire quatre bras. Avec deux bras, l'angle est de 180°, tandis qu'avec 4 bras, l'angle est de 90°.

L'actionneur piézoélectrique est configuré pour déplacer l'élément mobile 5 contre le rotor 3 pour le faire tourner. Les bras 6, 7, 8 effectuent un mouvement de va et vient radial de manière à faire osciller l'élément mobile 5 alternativement dans un plan sensiblement horizontal.

Les bras 6, 7, 8 sont de préférence formés d'un matériau cristallin ou polycristallin, par exemple en silicium, les bras 6, 7, 8 ayant une épaisseur leur permettant de se déformer. Les bras comportent des couches de matériau piézoélectriques, de manière à être activables électriquement. Chaque bras 6, 7, 8 comprend deux couches 23, 24 de matériau piézoélectrique juxtaposées latéralement, chaque couche 23, 24 étant reliée à une polarité inverse de l'autre. Chaque couche 23, 24 est terminée sur l'élément fixe 4 par une surface de contact par laquelle la tension est fournie à la couche 23, 24, par le biais d'un routage électrique qui n'est pas représenté sur les figures.

Ainsi, en activant électriquement les couches 23, 24 de matériau piézoélectrique, les bras 6, 7, 8 se déforment alternativement latéralement en direction du centre et de l'extérieur. L'activation est produite avec une tension alternative.

De préférence, le moteur 1 comprend des moyens d'ajustement de la tension mécanique de chaque bras 6, 7, 8, en particulier pour pouvoir centrer le mouvement orbital autour du rotor 3, ou encore pour changer légèrement la fréquence propre du moteur 1. Les moyens d'ajustement sont par exemple constants par une tension d'offset. Alternativement, les moyens d'ajustement sont temporels par la modification de l'amplitude de tensions électriques alternatives.

Chaque bras 6, 7, 8 décrit un arc sensiblement circulaire, depuis un bord interne de l'élément fixe 4 jusqu'à un bord externe de l'élément mobile 5. L'arc décrit un angle supérieur à 180°, voire supérieur à 250°. Ainsi, chaque bras entoure une partie de l'élément mobile 5. Deux bras 6, 7, 8 consécutifs sont en partie superposés. La longueur des bras 6, 7, 8 est choisie en fonction de la distance que doit décrire l'élément mobile 5.

Les bras 6, 7, 8 sont actionnés par un signal alternatif pouvant présenter une forme sinusoïdale, carrée ou trapézoïdal. Les signaux transmis aux bras 6, 7, 8 sont déphasés de $\frac{\pi}{N}$ entre deux bras consécutifs, $N$ étant le nombre de bras.

Ainsi, les trois bras 6, 7, 8 sont activés simultanément par un signal ayant un déphasage de 120° entre deux bras 6, 7, 8 consécutifs. Dans les modes de réalisation avec deux bras, le déphasage est de 180°, tandis qu'avec 4 bras, le déphasage est de 90°, et ainsi de suite.

Par la déformation des couches piézoélectriques, les bras se déforment. En actionnant les bras 6, 7, 8, ceux-ci effectuent un mouvement alternatif de va-et-vient radial, en se rapprochant et en s'éloignant du centre du moteur, c'est-à-dire du rotor 3. L'extrémité reliée à l'élément fixe 4 ne bouge pas, mais l'extrémité reliée à l'élément mobile 5 se déplace le plus. Ainsi, l'élément mobile 5 se déplace sous l'effet de la déformation des bras 6, 7, 8.

Le déphasage entre les bras 6, 7, 8 provoque un mouvement orbital, de préférence circulaire, de l'élément mobile 5. L'élément mobile 5 effectue un mouvement circulaire, tout en restant immobile en rotation sur lui-même. Ainsi, le mouvement rotatif est transmis au rotor 3 dans un sens, comme le montre la figure 2.

Le mouvement de l'élément mobile 5 est de préférence continu, et fait tourner le rotor 3 de manière continue. A cette fin, l'élément mobile 5 est toujours en contact avec le rotor 3 pendant le fonctionnement du moteur. Le contact entre l'élément mobile 5 et le rotor 3 est mobile à l'intérieur de l'anneau.

Les figures 2 à 5 montrent différents instants successifs au cours desquels, le point de contact P entre le rotor 3 et l'anneau se déplace à l'intérieur de l'anneau. Le mouvement orbital de l'anneau, dont l'espace intérieur est plus large que le rotor 3, engendre un point de contact P mobile entre l'anneau et le rotor 3. Une portion différente de la denture interne 12 de l'anneau engrène la denture périphérique 10 de la roue dentée 9 à chaque instant. Ainsi, le rotor 3 est entraîné en rotation sur l'lui-même.

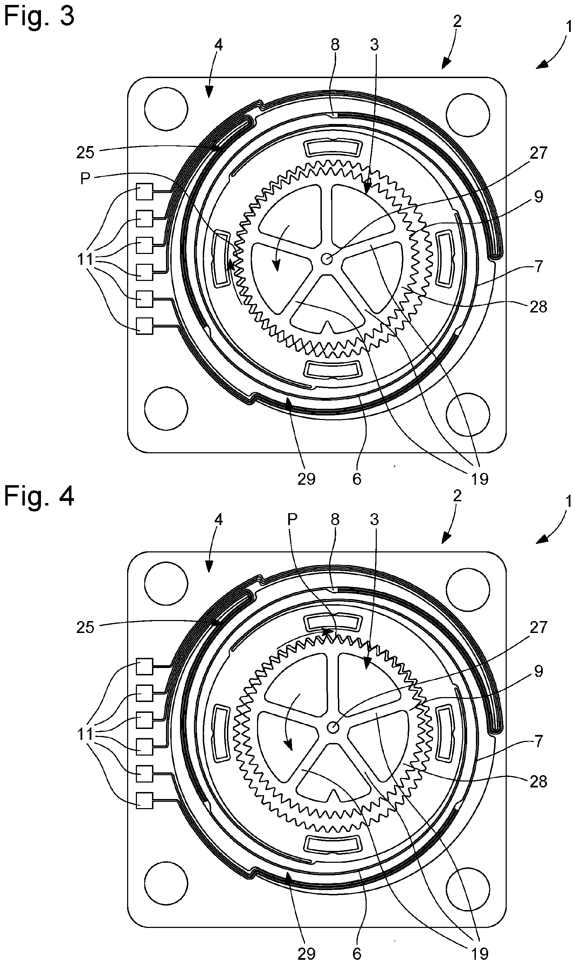

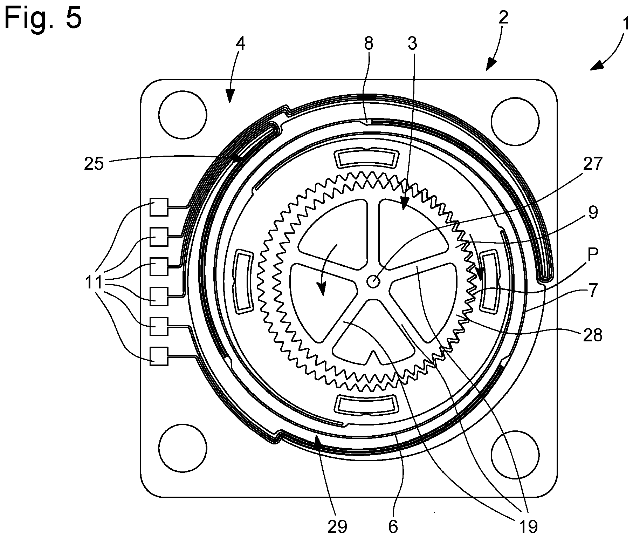

Sur la figure 2, l'élément mobile 5 est remonté, de sorte que le point de contact P est en bas de la roue dentée 9, soit à six heures. Sur la figure 3, l'élément mobile 5 s'est décalé à droite, de sorte que le point de contact P est à gauche de la roue dentée 9, soit à neuf heures. Puis l'élément mobile 5 est descendu, de sorte que le point de contact P est en haut de la roue dentée 9, soit à midi, comme le montre la figure 4. Enfin, sur la figure 5, l'élément mobile 5 s'est décalé à gauche, de sorte que le point de contact P est à droite de la roue dentée 9, soit à trois heures. D'une figure à la suivante, l'élément mobile 5 a effectué un mouvement orbital d'un quart de tour.

L'élément mobile 5 s'éloigne du rotor 3 pour ne plus être en contact avec le rotor 3, lorsque l'élément mobile 5 tourne en sens inverse, comme le montre la figure 1. Ainsi, le mouvement rotatif n'est pas transmis au rotor 3 dans l'autre sens, et le rotor 3 tourne seulement dans un sens.

La denture 10 du rotor 3 comprend par exemple 56 dents, tandis que la denture 12 de l'élément mobile 5 comprend 60 dents. Ainsi, le facteur de réduction r entre la vitesse du point de contact et la vitesse du rotor est donnée par $r = \dfrac{Zm - Zr}{Zr}$ où Zm désigne le nombre de dents de l'élément mobile 5, et Zr désigne le nombre de dents du rotor 3. Ainsi, dans notre exemple, $r = \dfrac{60-56}{56} = \dfrac{1}{14}$ . Cette réduction est avantageuse car elle est directement intégrée au moteur, réduisant ainsi le nombre de rouages de réduction supplémentaires nécessaires pour entraîner une aiguille par exemple.

De préférence, au moins une dent de la denture 10 du rotor 3 sont en contact avec la denture 12 de l'élément mobile 5 pour transmettre le mouvement. Ainsi, on évite le risque de blocage du rotor 3. On peut dimensionner l'élément mobile 5 et le rotor 3 pour que seulement une dent de la denture 10 soient en contact avec la denture 12 du rotor 3.

De préférence, des tensions électriques continues sont appliquées individuellement à chacun des bras 6, 7, 8, ce qui provoque un déplacement du centre d'oscillation de l'élément mobile 5, dans le but de compenser un éventuel décentrage naturel, et ainsi d'augmenter le rendement du moteur 1.

De préférence, les amplitudes des tensions alternatives appliquées aux bras 6, 7, 8 propre à faire osciller l'élément mobile 5 sont variables de façon à rendre parfaitement circulaire l'oscillation de l'élément mobile 5, dans le but de compenser une éventuelle ovalisation naturelle de la trajectoire, et ainsi également d'augmenter le rendement du moteur 1.

Si l'on veut faire tourner le rotor 3 dans l'autre sens, il suffit d'inverser les polarités des tensions électriques appliquées au résonateur. Ainsi, le mouvement des bras 6, 7, 8 provoque la rotation de l'élément mobile 5 du stator 2 dans l'autre sens. Dans le cas de l'actionnement d'un affichage à aiguilles, cela permet de régler la position des aiguilles dans les deux sens.

Dans le cas d'une montre, la fréquence de résonance ou fréquence propre du moteur 1 est adaptée à la fréquence du quartz, lequel sert à régler la marche du mouvement. On choisit une fréquence d'excitation correspondant à un sous-multiple de la fréquence du quartz, qui est généralement de 32764 Hz. Par exemple, on choisit une fréquence de 128Hz. La fréquence du moteur 1 est de préférence ajustée et accordée à la fréquence d'excitation de sorte que son amplitude d'oscillation ne descende pas en-dessous de 90-95% de l'amplitude maximale.

On adapte la fréquence en modifiant la masse de l'élément mobile 5 et/ou la rigidité des bras 6, 7, 8. On peut par exemple assembler un anneau 18 sous l'élément mobile 5 pour l'alourdir afin de baisser sa fréquence d'oscillation. L'anneau 18 comprend par exemple du maillechort, de préférence en totalité.

Pour augmenter la fréquence, on peut l'alléger en enlevant de la matière, par exemple au moyen d'un laser ou par fraisage. Comme ces procédés permettent un ajustement très précis, on les utilisera de préférence pour accorder le moteur au quartz.

Le pic de résonance du moteur accouplé à sa charge est dimensionné suffisamment large, soit beaucoup plus que celui du quartz. C'est pourquoi il est possible de varier légèrement la vitesse du moteur en changeant sa fréquence d'excitation, sans perdre beaucoup d'amplitude, par exemple pour rattraper une perte d'état suite à un choc ou tout autre perturbation, afin de réaligner la base de temps quartz avec la position des aiguilles.

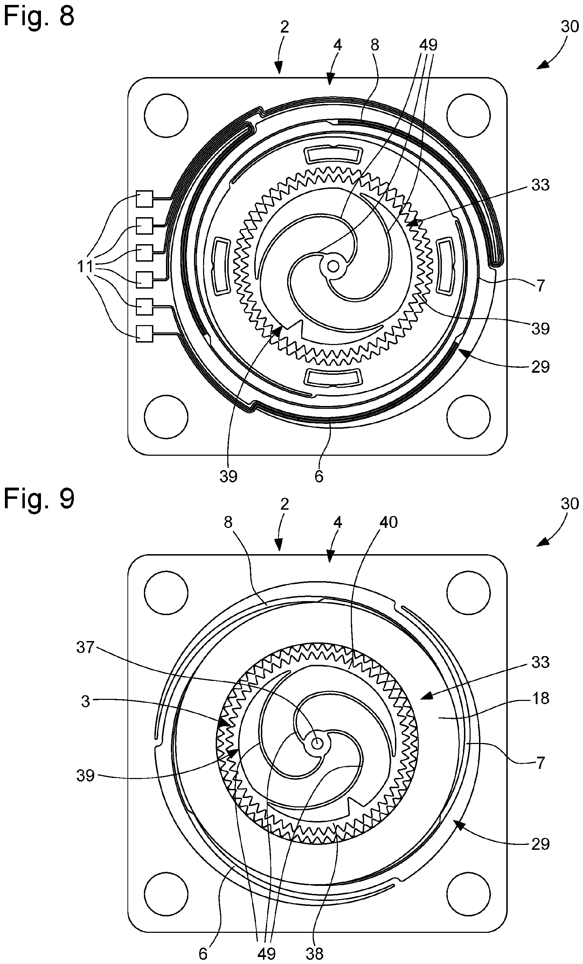

Les figures 8 et 9 montrent un deuxième mode de réalisation d'un moteur piézoélectrique 30 semblable au premier mode de réalisation. La différence est que le rotor 3 est muni de moyens d'amortissement. La roue 9 du rotor 3 comprend des lames flexibles 49 reliant un anneau 38 portant la denture externe 40 et le moyeu 37. Dans ce mode de réalisation, le rotor 3 est muni de trois lames flexibles 49 réparties angulairement dans la roue du rotor. Elles décrivent chacune une portion d'arc de cercle en spiral.

Ainsi, par leur déformation, les lames flexibles 49 absorbent les chocs exercés sur le rotor 3, si le moteur 30 est secoué violemment. La roue 39 est souple pour éviter de transmettre le choc à l'axe. Les paliers de l'axe peuvent aussi comporter des moyens d'amortissement supplémentaires, comme dans le premier mode de réalisation.

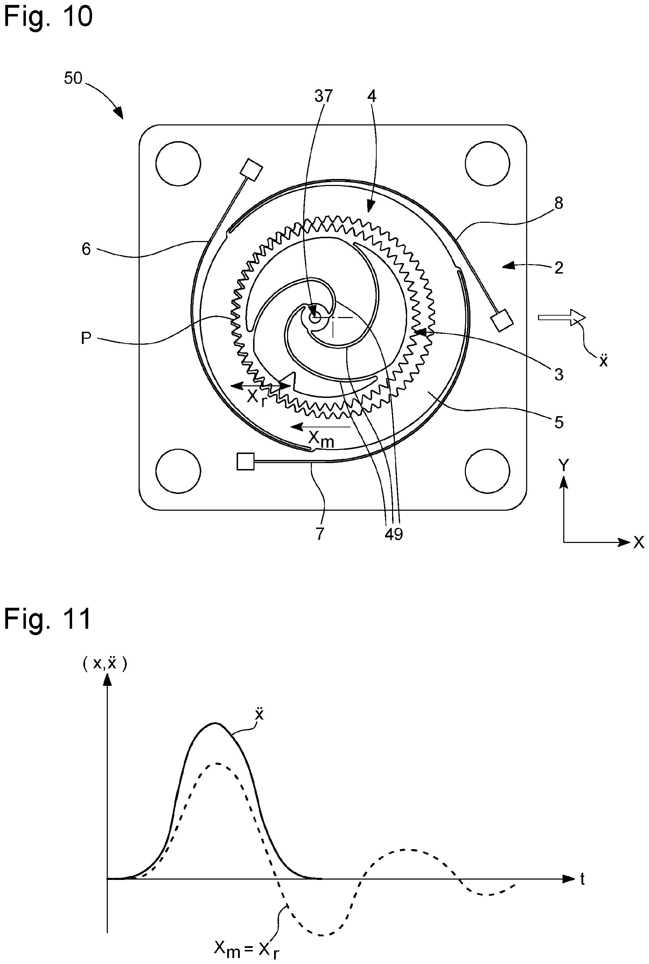

La figure 10 montre un troisième mode de réalisation d'un moteur piézoélectrique 50 semblable au deuxième mode de réalisation, pour lequel un choc est appliqué à l'élément fixe 4 du stator 2 pendant le fonctionnement du moteur piézoélectrique 50, Le choc produit une accélération $\ddot{X}$ dans le sens indiqué par la flèche, qui pousse l'élément mobile 5 à se déplacer de $X_m$ dans

le sens inverse de la flèche, et ainsi à se désengrener du rotor 3. Cependant, grâce à la déformation des lames flexibles 49 du rotor 3, celui-ci se déplace aussi de $X_r$, dans le même sens que l'élément mobile 5. Ainsi, le rotor 3 reste en contact avec l'élément mobile 5, afin d'être engrené malgré le choc. La masse du rotor 3 et l'élasticité des lames flexibles 49 permettent au rotor 3 de suivre la même trajectoire que l'élément mobile 5. Ainsi, l'engrènement et le mouvement orbital de l'élément mobile 5 sont conservés.

Sur le graphique de la figure 11, l'accélération $\ddot{X}$, due au choc appliqué horizontalement de gauche à droite, suit une courbe ou onde de choc représentant l'accélération $\ddot{X}$. Le déplacement $X_m$ de l'élément mobile 5 et $X_r$ du rotor 3 suit une courbe d'amortissement qui suit la courbe.

Avantageusement, on choisit les masses du rotor 3 et de l'élément mobile 5, ainsi que les rigidités des bras flexibles 49 du rotor 3 dans le sens du choc, et des bras flexibles 6, 7, 8 de la partie mobile 5, de sorte que les trajectoires $X_m$ et $X_r$ soient confondues.

Dans ce mode de réalisation, le choc est appliqué selon l'axe X. Mais un choc pourrait bien-sûr être appliqué dans n'importe quelle direction du plan X, Y, en gardant l'engrènement du rotor 3 et de l'élément mobile 5.

Avantageusement, on choisit les masses du rotor 3 et de l'élément mobile 5, et respectivement les rigidités des bras flexibles 49 du rotor 3 dans le sens du choc, et des bras flexibles 6, 7, 8 de la partie mobile 5, de manière à conserver le contact d'engrènement entre rotor 3 et l'élément mobile 5, quelle que soit la direction et l'intensité du choc.

Dans un quatrième mode de réalisation, non-représenté sur les figures, d'un moteur piézoélectrique semblable à tous les modes de réalisation précédents, le choc est détecté électroniquement à l'aide des tensions piézo-électriques induites sur les bras 6, 7, 8. Par exemple, pendant le fonctionnement du moteur 1, 30, l'un des bras 6, 7, 8 peut être momentanément basculé du mode actionneur au mode détecteur via un transistor de moyens de détection. Les moyens de détection détectent ainsi de façon cyclique s'il n'y pas de choc pendant un tiers de la durée du tour du point d'engrènement. Le cas échéant, elle peut effectuer une correction des signaux d'excitation suivants, par exemple par une augmentation momentanée des amplitudes des tensions alternatives appliquées pour forcer le contact pendant et après le choc.

On comprendra que diverses modifications et/ou améliorations et/ou combinaisons évidentes pour l'homme du métier peuvent être apportées aux différentes formes d'exécution de l'invention exposée ci-dessus sans sortir du cadre de l'invention définie par les revendications annexées.

## Revendications

1. Moteur piézoélectrique (1, 30, 50) rotatif, notamment pour une pièce d'horlogerie, le moteur (1, 30, 50) comprenant :

   - un rotor (3, 33) configuré pour pouvoir tourner et actionner un dispositif mécanique,
   - un stator (2) configuré pour faire tourner le rotor (3, 33), le stator (2) comprenant un actionneur piézoélectrique muni d'un résonateur (29) agencé pour effectuer un mouvement oscillatoire,

   **caractérisé en ce que** le stator (2) comprend un élément fixe (4) et le résonateur comprend un élément mobile (5) agencé à distance de l'élément fixe (4) et relié à l'élément fixe (4), l'actionneur piézoélectrique étant configuré pour déplacer l'élément mobile (5) contre le rotor (3) pour le faire tourner, le déplacement de l'élément mobile (5) faisant tourner le rotor (3) dans un premier sens.

2. Moteur piézoélectrique (1, 30, 50) selon la revendication 1, dans lequel le résonateur (29) comprend au moins un bras flexible (31, 32), de préférence deux bras flexibles, voire trois ou quatre bras flexibles, connectés par une extrémité à l'élément fixe (4) du stator (2), et par une autre extrémité à l'élément mobile (5) du stator (2), de préférence répartis angulairement autour de l'élément mobile (5).

3. Moteur piézoélectrique (1, 30, 50) selon l'une, quelconque, des revendications précédentes, dans lequel l'élément mobile (5) effectue un mouvement orbital dans un deuxième sens inverse du premier sens.

4. Moteur piézoélectrique (1, 30, 50) selon l'une, quelconque, des revendications précédentes, dans lequel l'élément mobile (5) est toujours en contact avec le rotor (3, 33) pendant le fonctionnement du moteur rotatif.

5. Moteur piézoélectrique (1, 30, 50) selon la revendication 3 ou 4, dans lequel le déplacement de l'élément mobile (5) fait tourner le rotor (3, 33) de manière continue.

6. Moteur piézoélectrique (1, 30, 50) selon l'une, quelconque, des revendications précédentes, dans lequel l'élément mobile (5) a une forme d'anneau, le rotor (3, 33) étant agencé à l'intérieur de l'anneau.

7. Moteur piézoélectrique (1, 30, 50) selon la revendication 6, dans lequel le contact entre l'élément mobile (5) et le rotor (3, 33) mobile est à l'intérieur de l'anneau.

**8.** Moteur piézoélectrique (1, 30, 50) selon la revendication 6, dans lequel le rotor (3, 33) comprend une roue dentée (9, 39), l'anneau comportant une denture interne (10) coopérant avec une denture externe (12) de la roue dentée (8, 38).

**9.** Moteur piézoélectrique (1, 30, 50) selon l'une, quelconque, des revendications précédentes, dans lequel l'élément mobile (5) est immobile en rotation sur lui-même.

**10.** Moteur piézoélectrique (1, 30, 50) selon l'une, quelconque, des revendications précédentes, dans lequel les bras (6, 7, 8) effectuent un mouvement de va et vient radial de manière à faire osciller l'élément mobile et le déplacer.

**11.** Moteur piézoélectrique (1, 30, 50) selon l'une, quelconque, des revendications précédentes, dans lequel l'élément mobile (5) est agencé autour du rotor (3, 33).

**12.** Moteur piézoélectrique (1, 30, 50) selon l'une, quelconque, des revendications précédentes, dans lequel le rotor (3, 33) et/ou le stator (2) est obtenu par micro-usinage, par exemple à partir de silicium ou de métal.

**13.** Moteur piézoélectrique (1, 30, 50) selon la revendication 2 et l'une, quelconque, des revendications précédentes, comportant des moyens d'ajustement constants ou temporels de la tension mécanique de chaque bras (6, 7, 8) par une tension électrique d'offset continue ou par la modification de l'amplitude de tensions électriques alternatives.

**14.** Moteur piézoélectrique (1, 30, 50) selon l'une, quelconque, des revendications précédentes, dans lequel les bras (6, 7, 8) sont actionnés par un signal déphasé de $\frac{2\pi}{N}$ entre deux bras consécutifs, *N* étant le nombre de bras.

**15.** Moteur piézoélectrique (1, 30, 50) selon l'une, quelconque, des revendications précédentes, dans lequel le résonateur (29) oscille à une fréquence correspondant à sa fréquence propre.

**16.** Moteur piézoélectrique (30, 50) selon l'une, quelconque, des revendications précédentes, dans lequel le rotor (33) comprend des lames flexibles (49) pour maintenir l'engrènement avec l'élément mobile (5) en cas de choc.

**17.** Pièce d'horlogerie comportant un mouvement d'horlogerie comprenant une transmission d'engrenages configurée pour faire tourner au moins une aiguille, caractérisé en ce qu'elle comprend un moteur piézoélectrique (1, 30, 50) selon l'une, quelconque, des revendications précédentes, le moteur piézoélectrique (1, 30, 50) étant agencé pour actionner la transmission d'engrenages.

# Fig. 1

# Fig. 2

## Fig. 3

## Fig. 4

Fig. 5

## Fig. 6

## Fig. 7

**Fig. 8**

**Fig. 9**

Fig. 10

50

37    4

6

8

2

P

Ẍ

X$_r$

3

X$_m$

5

7    49

Y

X

Fig. 11

(x, ẍ)

ẍ

t

X$_m$ = X$_r$

Europäisches
Patentamt

European
Patent Office

Office européen
des brevets

# RAPPORT DE RECHERCHE EUROPEENNE

Numéro de la demande

EP 21 21 6102

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 6 211 599 B1 (BARNES STEPHEN M [US] ET AL) 3 avril 2001 (2001-04-03) | 1-5, 9-12,17 | INV. G04C3/12 |
| A | * le document en entier * | 6-8, 13-16 | |
| X | WO 2006/097491 A1 (SILMACH [FR]; LE MOAL PATRICE [FR] ET AL.) 21 septembre 2006 (2006-09-21) | 1,2,4,5, 10-12,17 | |
| A | * abrégé; figures 1,2 * <br> * revendications 1-15 * | 3,6-9, 13-16 | |
| A | DE 692 04 332 T2 (EBAUCHESFABRIK ETA AG [CH]) 25 avril 1996 (1996-04-25) <br> * abrégé * <br> * alinéa [0022] – alinéa [0048] * <br> * revendications 1-7 * <br> * figures 2,4-6 * | 1-17 | |
| A | US 2006/001331 A1 (NAGAHAMA REIKO [JP]) 5 janvier 2006 (2006-01-05) <br> * alinéa [0005] – alinéa [0009] * <br> * alinéa [0071] – alinéa [0087] * <br> * alinéa [0142] * <br> * figures 5,9,10 * | 1-17 | DOMAINES TECHNIQUES RECHERCHES (IPC) <br><br> G04C |
| A | US 5 343 108 A (MIYAZAWA OSAMU [JP] ET AL) 30 août 1994 (1994-08-30) <br> * abrégé * <br> * revendications 1,7-9 * <br> * figures 1,11 * | 1-17 | |

Le présent rapport a été établi pour toutes les revendications

| Lieu de la recherche | Date d'achèvement de la recherche | Examinateur |
|---|---|---|
| La Haye | 2 juin 2022 | Jacobs, Peter |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

  ...........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 21 6102

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02−06−2022

| Document brevet cité au rapport de recherche | | Date de publication | Membre(s) de la famille de brevet(s) | | Date de publication |
|---|---|---|---|---|---|
| US 6211599 | B1 | 03−04−2001 | US | 6211599 B1 | 03−04−2001 |
| | | | US | 6313562 B1 | 06−11−2001 |
| WO 2006097491 | A1 | 21−09−2006 | EP | 1878108 A1 | 16−01−2008 |
| | | | ES | 2798260 T3 | 10−12−2020 |
| | | | FR | 2883276 A1 | 22−09−2006 |
| | | | JP | 2008532782 A | 21−08−2008 |
| | | | US | 2008150391 A1 | 26−06−2008 |
| | | | WO | 2006097491 A1 | 21−09−2006 |
| DE 69204332 | T2 | 25−04−1996 | CH | 680487 A | 15−09−1992 |
| | | | CN | 1065361 A | 14−10−1992 |
| | | | DE | 69204332 T2 | 25−04−1996 |
| | | | EP | 0505848 A1 | 30−09−1992 |
| | | | JP | 2905835 B2 | 14−06−1999 |
| | | | JP | H06225551 A | 12−08−1994 |
| | | | KR | 920019056 A | 22−10−1992 |
| | | | TW | 223194 B | 01−05−1994 |
| | | | US | 5296776 A | 22−03−1994 |
| US 2006001331 | A1 | 05−01−2006 | CN | 1722600 A | 18−01−2006 |
| | | | DE | 602005000585 T2 | 22−11−2007 |
| | | | EP | 1617490 A1 | 18−01−2006 |
| | | | JP | 4141990 B2 | 27−08−2008 |
| | | | JP | 2006033912 A | 02−02−2006 |
| | | | US | 2006001331 A1 | 05−01−2006 |
| US 5343108 | A | 30−08−1994 | DE | 69228888 T2 | 12−08−1999 |
| | | | EP | 0495665 A1 | 22−07−1992 |
| | | | KR | 920015691 A | 27−08−1992 |
| | | | US | 5343108 A | 30−08−1994 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CH 709512

- EP 0587031 A